# EUROPÄISCHE PATENTSCHRIFT

(11) **EP 3 692 188 B1**
(45) Veröffentlichungstag und Bekanntmachung des Hinweises auf die Patenterteilung: **06.09.2023**
(21) Anmeldenummer: 18778936.7
(22) Anmeldetag: 03.10.2018
(51) Int. Cl.: D01F 2/00, D01D 5/098, D01D 4/02, D04H 1/56, D04H 3/16

(54) **VORRICHTUNG FÜR DIE EXTRUSION VON FILAMENTEN UND HERSTELLUNG VON SPINNVLIESSTOFFEN**
DEVICE FOR THE EXTRUSION OF FILAMENTS AND MANUFACTURE OF MELTSPUN NONWOVENS
DISPOSITIF PERMETTANT L'EXTRUSION DE FILAMENTS ET LA FABRICATION DE NON-TISSÉS MELTSPUN

(30) Priorität: 06.10.2017 EP 17195185
(43) Veröffentlichungstag der Anmeldung: 12.08.2020
(73) Patentinhaber: Lenzing Aktiengesellschaft, 4860 Lenzing (AT)
(72) Erfinder: SAGERER-FORIC, Ibrahim, 4840 Vöcklabruck (AT)
(74) Vertreter: Nemec, Harald
(86) Internationale Anmeldenummer: PCT/EP2018/076909
(87) Internationale Veröffentlichungsnummer: WO 2019/068764

(56) Entgegenhaltungen:
- CN-A- 103 882 535
- DE-A1- 3 938 164
- US-A1- 2005 056 956
- US-A1- 2014 290 205

## Beschreibung

Die Erfindung betrifft eine Vorrichtung für die Extrusion von Filamenten mit einer Mehrzahl von in zumindest zwei hintereinander liegenden Reihen angeordneten Extrusionskapillaren mit Extrusionsöffnungen zur Extrusion einer Spinnlösung unter Bildung der Filamente und einer Mehrzahl von Mitteln zur Gasstromerzeugung zur Erzeugung eines zumindest im Bereich der Extrusionsöffnungen im Wesentlichen in Richtung der Extrusion der Filamente orientierten Gassstroms.

Des Weiteren betrifft die Erfindung ein Verfahren zur Herstellung einer Vorrichtung für die Extrusion von Filamenten.

Die vorliegende Erfindung ist eine Vorrichtung für die Extrusion von Filamenten und für die Herstellung von Spinnvliesstoffen, die den Anspruch nach vereinfachter Fertigung, einfachem Zusammenbau, hoher Designvielfalt und hohem Durchsatz dadurch erfüllt, dass sie aus einem Grundmaterial in einem Stück gefertigt werden kann und aus massiven Extrusionssäulen besteht, die mehrreihig ausgeführt und so vielfältig gestaltet werden können, dass hohe Durchsätze bei der Extrusion von feinen, geometrisch unterschiedlich geformten Filamenten, aus verschiedensten Schmelzen und Lösungen ermöglicht werden.

Seit einigen Jahrzehnten werden verschiedenste Verfahren, mit unterschiedlichsten Düsen verwendet, um feine Fasern und Filamente mithilfe eines heißen Gasstroms, aus unterschiedlichsten Polymerschmelzen und Lösungen herzustellen. Die so hergestellten Fasern bzw. Filamente können dann als Vliesstoff auf einer perforierten Oberfläche, beispielsweise auf einer Trommel oder einem Förderband, abgelegt werden. Je nach Verfahren und verwendetem Polymer, wird der hergestellte Vliesstoff danach entweder direkt aufgewickelt, oder zuerst nachbehandelt, bevor er dann als Rolle aufgewickelt und für den Verkauf konfektioniert wird. Um die Produktionskosten weiter zu senken, sind die Steigerung des Durchsatzes und die Reduktion des Energiebedarfes bei zumindest gleichbleibender Vliesstoffqualität, die größten Optimierungsbereiche der Spinnvliesindustrie.

Als Rohstoffe können, wie in US3543332 beschrieben, beispielsweise Polyolefine, Polyamide, Polyester, Polyvinylacetat, Celluloseacetat und viele weitere schmelzbare oder lösliche Stoffe verwendet werden. Es wurden auch Verfahren für die Herstellung von Spinnvliesen aus Lyocell-Spinnmasse, wie in US6306334, US8029259 und US7922943 beschrieben, entwickelt. Als weiteres Beispiel wird in US7939010 die Herstellung von Spinnvliesen aus Stärke beschrieben. Da die verwendeten Rohstoffe sich in ihren Eigenschaften, speziell in der Rheologie, teilweise sehr unterscheiden, erhöht sich der Anspruch an die Flexibilität und an die Anpassbarkeit des Düsendesigns.

Die bis jetzt für die Herstellung von Spinnvliesstoffen nach dem Meltblown-Verfahren verwendeten Düsen, können grob in einreihige- und mehrreihige Düsen unterteilt werden.

Einreihige Düsen, wie in US3825380 beschrieben, können zwar für die Herstellung von Spinnvliesstoffen aus Schmelzen und Lösungen verwendet werden, aber je nach Viskosität der Schmelze bzw. der Lösung kann der Druckverlust sehr hoch und der maximale Durchsatz dadurch sehr gering sein. Um den Bedarf nach feineren Fasern und höheren Durchsätzen zu decken, wurden zwar wie in US6245911 und US7316552 beschrieben, auch Weiterentwicklungen an der einreihigen Düse vorgenommen, aber das Design stößt geometrisch und fertigungstechnisch bereits an seine Grenzen. Beispielsweise wurde im Laufe der Entwicklung der Abstand zwischen den Extrusionskapillaren immer weiter verringert, um den Durchsatz pro Düse zu erhöhen, doch damit stiegen auch der Aufwand und die Präzession in der Fertigung der Düsenteile, sowie die Gefahr für Spinnfehler im Betrieb. Der Durchsatz einer einreihigen Düse liegt, je nach verwendeter Schmelze bzw. Lösung und gewählten Betriebsparametern, bei 10kg/h/m bis 100kg/h/m.

Um den Durchsatz zu erhöhen, wurde die in US4380570 beschriebene mehrreihige NadelDüse entwickelt. Dabei wird die Schmelze bzw. Lösung durch eine Düse mit mehreren Reihen und Spalten, über Hohlnadeln extrudiert. Durch das entstandene Nadelfeld kann der Durchsatz pro Düse, im Vergleich zu einreihigen Düse, erhöht werden.

Ein Nachteil ist, dass die Hohlnadeln durch eine komplexe Unterstützungsplatte gehalten werden müssen, damit sie durch den umgebenden Gasstrom nicht zu stark vibrieren oder verbogen werden. Die Beschädigung der empfindlichen Nadeln während der Fertigung und dem Zusammenbau ist eine ständige Gefahr. Die Reparatur kann je nach Schadensausmaß sehr aufwendig sein und nur mit speziellen Fertigungswerkzeugen, wie Laserbohrern und Laserschweißern, erfolgen. Die Unterstützungsplatte verursacht auch zusätzlichen Fertigungsaufwand und zudem einen Druckverlust des Gasstroms in der Düse.

Am unteren Ende der Düse ragt die Hohlnadel durch eine Gasstromaustrittsplatte heraus. Die Gasstromaustrittsplatte wird benötigt, um den Gasstrom gleichmäßig um die Hohlnadeln zu verteilen und auf hohe Austrittsgeschwindigkeiten zu beschleunigen. Im einfachsten Fall ist rund um jede Hohlnadel ein Gasstromaustrittsloch angeordnet, aus dem der heiße Gasstrom austritt und die Filamente mitreißt. Dieses Düsendesign erreicht zwar Durchsätze im Bereich von 10kg/h/m bis 500kg/h/m, doch sind die Fertigung, der Zusammenbau, der Betrieb und die Reinigung sehr aufwändig. Das Design bietet auch nicht die nötige Flexibilität, um für verschiedenste Rohstoffe angepasst zu werden und trotzdem hohe Durchsätze zu erzielen. In US5476616, US7018188 und US6364647 wurden bereits Optimierungen am Design der Hohlnadeln, der Unterstützungsplatte und der Gasaustrittsplatte vorgenommen, doch ist auch bei diesen optimierten Designs die Gefahr für Undichtheiten aufgrund der vielen Teile und für beschädigte Nadeln sehr hoch. Da die Nadeln beispielsweise zwischen 20mm und 70mm lang sein können, ist der Druckverlust innerhalb der Nadeldüse höher als bei der einreihigen Düse. Das führt bei längeren Düsen zu Statikproblemen aufgrund von Durchbiegung. Die Entwicklung sollte aus wirtschaftlichen Gründen aber auf längere Düsen, mit bis zu 5m Länge und darüber hinaus, ausgerichtet sein, um die Arbeitsbreite, den Durchsatz und die Wirtschaftlichkeit der Anlagen zu erhöhen.

Nadeldüsen entsprechend dem Oberbegriff des Anspruchs 1 der vorliegenden Erfindung sind zudem aus US 2005/0056956 A1 bekannt.

Neben den bereits genannten Düsenarten gibt es noch alternative Designs wie die Laval-Düse gemäß US7922943, die aber auch aus vielen Einzelteilen besteht und den Anspruch an hohe Durchsätze sowie Einfachheit in der Fertigung und im Zusammenbau nicht erfüllt. Zudem sind Düsen mit komplexeren Kapillaren-Geometrien aus US 2014/0290205 A1 bekannt.

Da es bis jetzt weder bei den einreihigen noch bei den mehrreihigen Düsen ein Design gibt, welches mit geringem Aufwand gefertigt, zusammengebaut sowie betrieben werden kann und da die Forderung nach höheren Durchsätzen, längeren Düsen, geringeren Betriebskosten und zumindest gleichbleibenden Vliesqualitäten aus verschiedensten Rohstoffen besteht, ist es die Aufgabe der vorliegenden Erfindung, die gestellten Ansprüche durch ein neues Düsendesign zu erfüllen:
- Ziel der vorliegenden Erfindung ist es, die Fertigung, den Zusammenbau und den Betrieb der Düse soweit wie möglich zu vereinfachen, aber den Gestaltungsspielraum in Richtung Extrusionskapillare, Austrittsgeometrie der Extrusionsöffnung und Luftführung, für die Herstellung unterschiedlicher Fasergeometrien und Vliesstoffe, so weit wie möglich zu erweitern.
- Ein weiteres Ziel der vorliegenden Erfindung, ist es den Druckverlust sowohl auf Seiten der Schmelze bzw. Lösung, als auch auf Seiten des Gasstroms zu minimieren. Dadurch soll einerseits der Durchsatz pro Meter Düsenlänge erhöht und andererseits die Durchbiegung der Düse reduziert werden, um längere Düsen mit geringem Aufwand fertigen zu können.

Erfindungsgemäß wird die vorliegende Aufgabe dadurch gelöst, dass die Extrusionskapillaren in aus einer Grundplatte herausragenden und mit dieser Grundplatte einstückig ausgebildeten Extrusionssäulen angeordnet sind.

Die vorliegende Aufgabe wird außerdem durch ein Verfahren zur Herstellung der Vorrichtung zur Extrusion von Filamenten gelöst.

Bevorzugte Ausführungsformen der vorliegenden Erfindungen sind in den Unteransprüchen beschrieben.

Die erfindungsgemäße Vorrichtung umfasst einstückig mit der Grundplatte ausgebildete Extrusionssäulen, wobei die Grundplatte und die Extrusionssäulen in einem Stück gemeinsam aus einem Grundmaterial ausgeformt sind. Diese neue Art von Düse besteht aus massiven Extrusionssäulen, die durch mehrreihige Ausführung und große Durchmesser, geringe Druckverluste und hohe Durchsätze auf Seiten der Schmelze bzw. Lösung ermöglichen.

Die erfindungsgemäße Vorrichtung kann durch Fertigungsmethoden aus dem Bereich der subtraktiven Fertigung, wie beispielsweise Fräsen oder Ätzen, aus einem Grundmaterialblock gefertigt werden. Das Grundmaterial kann beispielsweise ein Metall sein. Weitere subtraktive Fertigungsmethoden ergeben sich für den Fachmann aus diesem beispielhaften Verweis. Alternativ kann die erfindungsgemäße Vorrichtung durch Fertigungsmethoden aus dem Bereich der additiven Fertigung wie beispielsweise dreidimensionale Druckverfahren hergestellt werden. Beispielhaft seien hier selektives Laserschmelzen und Schmelzschichtung erwähnt. Weitere additive Fertigungsmethoden ergeben sich für den Fachmann aus diesem beispielhaften Verweis. Des Weiteren kann die erfindungsgemäße Vorrichtung durch Urformen oder Umformen, z.B. durch Gießen, hergestellt werden.

Die Extrusionsöffnung kann trotzdem klein und in verschiedenen Geometrien ausgeführt werden, um feine Fasern und Filamente, mit unterschiedlichsten Formen, bei geringen Luftmengen, zu erzeugen.

Um die Erfindung besser zu veranschaulichen werden die wesentlichen Merkmale anhand von bevorzugten Ausführungsformen der erfindungsgemäßen Vorrichtung in folgenden Figuren dargestellt:
Figur 1 zeigt eine schematische Seitenansicht der erfindungsgemäßen Vorrichtung mit Extrusionssäulen, Extrusionskapillaren, Gaszufuhröffnungen und einem Gasstromverteiler.
Figur 2 zeigt die erfindungsgemäße Vorrichtung in einer perspektivischen Darstellung.
Figur 3 zeigt verschiedene Formen der Außengeometrie von Extrusionssäulen der Vorrichtung.
Figur 4 zeigt verschiedene Formen der Innengeometrie der Extrusionskapillaren der Vorrichtung.
Figur 5a und Figur 5b zeigen verschiedene Gestaltungsformen der Geometrie eines Einlassabschnittes in schematischen Seitansichten.
Figur 5c zeigt verschiedene Gestaltungsformen der Geometrie eines Einlassabschnittes sowie die Anordnung von Extrusionskapillaren in einer Draufsicht.
Figur 6 zeigt verschiedene Formen von Extrusionsöffnungen am Auslauf der Extrusionskapillaren.
Figur 7a zeigt eine Gasstromaustrittsplatte zur Beeinflussung der Luftströmung beim Austritt und verschiedene Geometrien der Gasaustrittsöffnungen in einer schematischen Seitenansicht.
Figur 7b zeigt eine Gasstromaustrittsplatte zur Beeinflussung der Luftströmung beim Austritt und verschiedene Geometrien der Gasaustrittsöffnungen in einer schematischen Draufsicht.

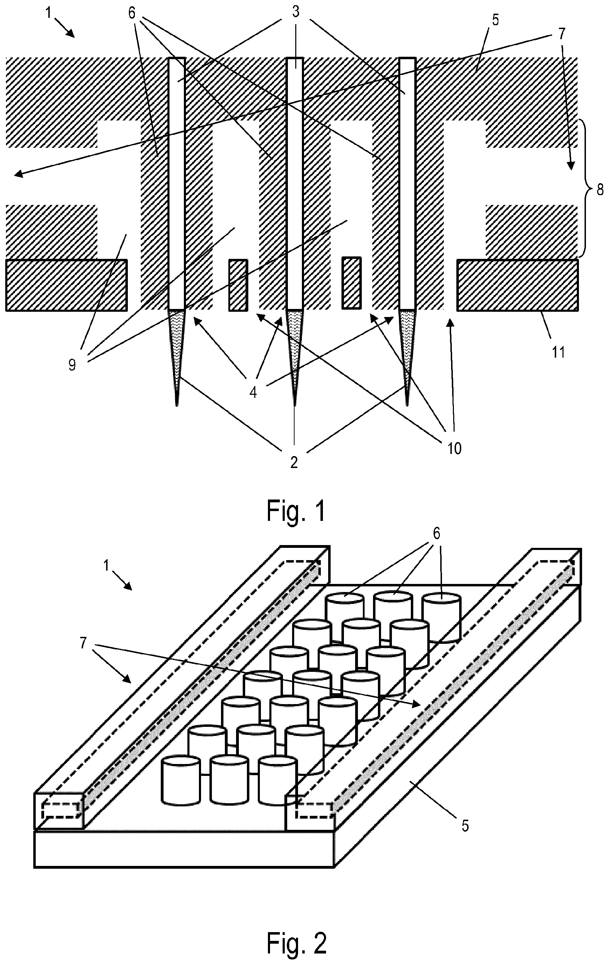

Figur 1 zeigt eine schematische Seitenansicht einer bevorzugten Ausführungsform der erfindungsgemäßen Vorrichtung 1 für die Extrusion von Filamenten 2. Die Vorrichtung 1 weist eine Mehrzahl von in zumindest zwei hintereinander liegenden Reihen angeordneten Extrusionskapillaren 3 auf. Die Extrusionskapillaren 3 weisen Extrusionsöffnungen 4 zur Extrusion einer Spinnlösung unter Bildung von Filamenten 2 auf. Die Vorrichtung 1 umfasst des Weiteren eine Mehrzahl von Mitteln 7, 8, 10 zur Gasstromerzeugung zur Erzeugung eines zumindest im Bereich der Extrusionsöffnungen 4 im Wesentlichen in Richtung der Extrusion der Filamente 2 orientierten Gassstroms. Die Extrusionskapillaren 3 sind in der erfindungsgemäßen Vorrichtung 1 in aus einer Grundplatte 5 herausragenden und mit dieser Grundplatte 5 einstückig ausgebildeten Extrusionssäulen 6 angeordnet. Die Vorrichtung 1 wird auch als Säulendüse bezeichnet.

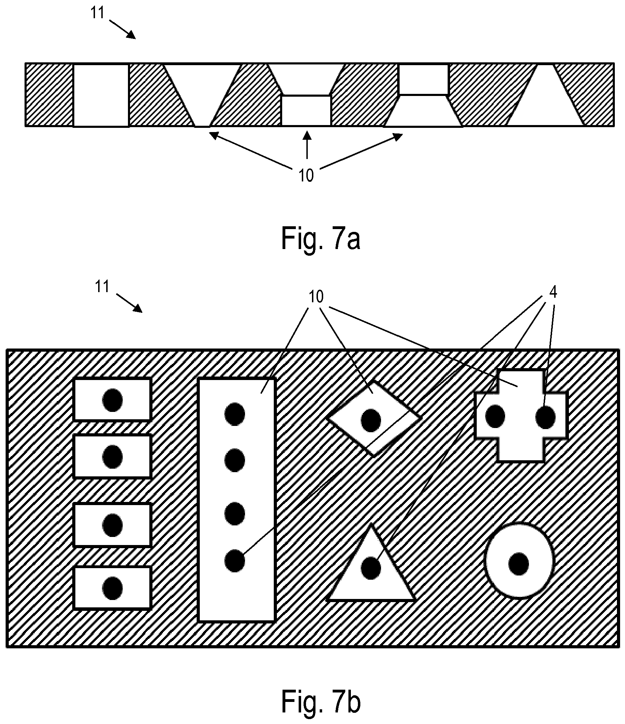

Die Mittel 7, 8, 10 zur Gasstromerzeugung beinhalten einen nicht näher dargestellten Gasstromverteiler 8 und zumindest zwei Gaszufuhröffnungen 7, die benachbart zur Grundplatte 5 angeordnet sind. Gemäß einer weiteren Ausführungsvariante der Vorrichtung beinhalten die Mittel zur Gasstromerzeugung auch Gasaustrittsöffnungen 10, welche in Figur 7a und 7b dargestellt sind Die Gaszufuhröffnungen 7 liegen einander gegenüber und sind zur Erzeugung eines im Bereich der Gaszufuhröffnungen 7 im Wesentlichen senkrecht zur Richtung der Extrusion der Filamente 2 orientierten Gasstroms ausgestaltet.

Figur 1 zeigt des Weiteren die Vorrichtung 1 mit Extrusionssäulen 6, Extrusionskapillaren 3 und Gasstromkanälen 9. Die Schmelze bzw. Lösung tritt oben in die Extrusionskapillare 3 ein und wird unten als Filament 2 extrudiert. Der Gasstrom tritt seitlich über die Gaszufuhröffnungen 7 in den Gasstromverteiler 8 ein und wird in einem Gasstromkanal 9 zu den einzelnen Extrusionssäulen 6 geleitet und von den Extrusionssäulen 6 in Richtung Extrusionsöffnung 4 umgelenkt.

Es hat sich gezeigt, dass die in Figur 1 dargestellte erfindungsgemäße Vorrichtung 1 in einem Stück gefertigt werden kann. Alle für die Spinnvliesherstellung notwendigen Geometrien können mittels unterschiedlichsten Fertigungsverfahren in einen Block aus Grundmaterial eingearbeitet werden bzw. entstehen gemeinsam während der Fertigung aus dem Grundmaterial, z.B. durch Gießen oder additive Fertigungsmethoden. Dabei ist die innere Geometrie der Extrusionssäulen 6 wichtig für die Extrusionsbedingungen der Schmelze bzw. Lösung, da der Druckverlust drastisch verringert werden kann.

Überaschenderweise hat sich gezeigt, dass die Herstellung von Vliesstoffen aus Schmelzen und Lösungen mit der vorliegenden Erfindung auch ohne Gasstromaustrittsplatten (die bei Vorrichtungen des Standes der Technik notwendig sind) funktioniert. Die äußere Geometrie der Extrusionssäulen 6 und deren Anordnung zueinander, also die Form des daraus entstandenen Gasstromkanals 9 reicht aus, um den Gasstrom umzulenken, zu beschleunigen und die extrudierten Filamente 2 zu verstrecken.

Erfindungsgemäß werden auch keine Unterstützungsplatten benötigt, da die Extrusionssäulen 6 stabil genug sind und nicht verbogen oder durch den Gasstrom in Vibration versetzt werden können.

Die Schmelze bzw. die Lösung tritt in die Extrusionskapillare 3 ein und fließt bis zur Extrusionsöffnung 4. Zeitgleich wird auf beiden Längsseiten der Vorrichtung 1 ein Gasstrom über den Gasstromverteiler 8 sowie die Gaszufuhröffnungen 7 im Wesentlichen senkrecht zur Richtung der Extrusion der Filamente zugeführt. Der Gasstrom wird durch den zwischen den Extrusionssäulen 6 entstandenen Gasstromkanal 9 gelenkt. Da die Gasströme von beiden Seiten aufeinanderprallen, werden sie entlang der Extrusionssäulen 6 in Richtung Extrusionsöffnung 4 gelenkt und beschleunigt. Beim Austritt aus der Extrusionskapillare 3 wird das extrudierte Schmelze- bzw. Lösungsfilament von dem heißen Gasstrom mit hoher Geschwindigkeit mitgerissen und verstreckt. Durch die Turbulenz des Gasstroms werden die verstreckten Filamente 2 in Wirrlage versetzt und als Vliesstoff auf einer Trommel bzw. auf einem Förderband (nicht dargestellt) abgelegt.

Ein Vorteil der Vorrichtung 1 ist, dass sie im Gegensatz zu einer Nadeldüse aus dem Grundmaterial in einem Stück bzw. aus einem Grundmaterialblock gefertigt werden kann, und dass keine langen, dünnen Röhrchen in eine Platte eingesetzt und aufwändig geschweißt oder geklebt werden müssen. Die Gasstromkanäle 9 werden beispielsweise mechanisch abgetragen, und daraus ergeben sich gleichzeitig die Extrusionssäulen 6. Das vereinfacht die Fertigung der Vorrichtung 1 und erhöht die Stabilität. Dadurch ist es auch nicht notwendig Unterstützungsplatten zu fertigen und einzubauen. Es besteht auch kein Risiko mehr, dass Nadeln beim Fertigen oder beim Zusammenbauen der Vorrichtung 1 verbogen werden.

Über die Gasstromkanäle 9 wird der über den Gasstromverteiler 8 eintretende Gasstrom gelenkt und in Richtung Extrusionsöffnung 4 beschleunigt. Überaschenderweise hat sich gezeigt, dass diese Umlenkung durch die Gasstromkanäle 9 bei 0,1 bis 3bar, bevorzugt 0,3 bis 1,5bar, noch mehr bevorzugt zu 0,5 bis 1,0bar Gasstromvordruck, zu Geschwindigkeiten von 20 bis 250m/s bei der Extrusionsöffnung 4 führt, ohne eine Gasstromaustrittsplatte verwenden zu müssen. Dadurch können mit der Vorrichtung 1 auch Vliesstoffe hergestellt werden, ohne das Gas durch eine Gasstromaustrittsplatte 11 zu fördern. Somit kann ein weiteres Düsenteil eingespart werden, um den Aufwand bei der Fertigung, beim Zusammenbau und beim Betrieb der Vorrichtung 1 zu reduzieren.

In Figur 1 ist des Weiteren eine Gasaustrittsplatte 11 vorgesehen. Gasaustrittsplatten 11, insbesondere mit unterschiedlichsten Geometrien, siehe Figur 7, können gegebenenfalls zusätzlich verwendet werden, um die Verstreckung der Filamente 2, die Vliesablage, die Produktqualität und die benötigte Gasmenge zu beeinflussen.

In diesen Gassaustrittsplatten 11 können, wie in Figur 1 und Figur 7 dargestellt, gegebenenfalls zusätzlich zu den Gaszufuhröffnungen 7, Gasaustrittsöffnungen 10 vorgesehen sein, die im Bereich der Extrusionsöffnungen 4 angeordnet sind. Die Gasaustrittsöffnungen 10 können entweder zur Erzeugung eines in Richtung der Extrusion orientierten Gasstromes ausgestaltet sein oder, im Falle, dass bereits Gaszufuhröffnungen 7 benachbart zur Grundplatte vorgesehen sind, zum Auslass des bereits durch die Gaszufuhröffnungen 7 erzeugten Gasstromes in Richtung der Extrusion ausgestaltet sein.

In einer Ausführungsvariante der Vorrichtung 1 ist die Gasaustrittsplatte 11 hierbei einstückig mit der Grundplatte 5 und den Extrusionssäulen 6 ausgebildet. Diese werden hierbei wiederum in einem Stück aus dem Grundmaterial gefertigt.

Die gemäß einer der zuvor beschriebenen Ausführungsvarianten gefertigte Vorrichtung 1 wird an der Oberseite an einen Schmelze- bzw. Lösungsverteiler befestigt. Der Anschluss des Gasstromverteilers 8 an die Gasstromversorgungsleitung kann entweder an den Längsseiten, auf der Breitseite, oder auf der Oberseite der Vorrichtung 1 erfolgen. Da die Vorrichtung 1 aus einem massiven Stück Grundmaterial besteht, können auch mit wenig Aufwand Heizsysteme (bspw. Heißwasser, ÖL, Dampf, Elektroheizungen,...) installiert werden, um die Spinnstabilität zu verbessern und die Gleichmäßigkeit der Vliesstoffqualität zu erhöhen.

Die Gasstromzuführung über den Gasstromverteiler 8 zu den Extrusionssäulen 6 erfolgt wie in Figur 2 gezeigt gleichmäßig über die beiden Längsseiten der Vorrichtung 1. Figur 2 zeigt, dass die ganze Vorrichtung 1, wie hierin beschrieben, in einem Abschnitt gefertigt werden kann. Bei größeren Vorrichtungen ist es natürlich auch möglich, diese aus mehreren wie hierin beschrieben gefertigten Abschnitten aufzubauen (nicht dargestellt), welche in üblicher Weise miteinander zu einer Vorrichtung verbunden werden können. Jeder Abschnitt bildet dabei ein Segment der gesamten Vorrichtung 1, wobei die oben beschriebenen Fertigungs- und Betriebsvorteile gegenüber den Vorrichtungen im Stand der Technik vollständig erhalten bleiben.

Bei der Fertigung des Abschnittes bzw. der Abschnitte sind viele Geometrien und Variationen möglich. Die in Figur 2 nicht dargestellten Extrusionskapillaren 3 können beispielsweise gebohrt werden, während die Extrusionssäulen 6 aus dem Grundmaterialblock gefräst, oder mit dem Abschnitt gegossen werden können. Je nach Geometrie sind auch andere Fertigungsverfahren möglich. Die Extrusionssäulen 6 können über die Breite der Vorrichtung 1 auch zu Gruppen zusammengefasst werden, solange die Gasstromverteilung gewährleistet ist. Dabei können die Höhe und die Form des Austritts aus dem in Figur 2 nicht dargestellten Gasstromverteiler 8 variieren. Die Höhe des Austrittskanals sollte im Bereich von 5mm bis 100mm, bevorzugt 10mm bis 50mm, noch mehr bevorzugt zwischen 15mm bis 30mm liegen. Die Länge des Gasstromverteilers 8 soll mindestens von der äußersten Extrusionssäulenreihe auf der einen Seite, bis zur letzten Extrusionssäulenreihe auf der gegenüberliegenden Seite reichen, damit alle Extrusionssäulen 6 gleichmäßig mit dem Gasstrom versorgt werden. Dabei kann es aus Stabilitätsgründen notwendig sein, dass der Gasstromverteiler 8 durch Stege unterbrochen werden muss, um die Stabilität des Bauteils zu gewährleisten. Weiters hat sich herausgestellt, dass es sinnvoll ist, die Oberfläche der gasstromführenden Teile zu polieren, um Turbulenzen vor dem Austritt aus dem Gasstromverteiler 8 zu minimieren. Die Austrittsgeometrie des Gasstromverteiler 8 kann in verschiedensten Formen gefertigt werden. Einige Beispiele sind ein durchgehender rechteckiger Spalt, mehrere unterbrochene rechteckige Spalte und mehrere kreisrunde, trapezförmige, dreieckige Querschnitte. Neben den erwähnten Beispielen sind weitere Geometrien, Kombinationen der Geometrien und unterschiedliche Geometrien bei der Vorrichtung 1 möglich.

Ein Teil des aus dem Gasstromverteiler 8 über die Gaszufuhröffnungen 7 austretenden Gasstromes prallt gegen die erste Extrusionssäulenreihe und wird in Richtung Extrusionsöffnung 4 umgelenkt. Der Rest des Gasstromes strömt im Gasstromkanal 9 zwischen den Extrusionssäulen 6 in die inneren Reihen, bis er auf den Gasstrom von der anderen Vorrichtungsseite prallt. Dadurch entsteht offenbar ein Staukegel, der den Gasstrom entlang der inneren Extrusionssäulenreihen, bis zum Extrusionsaustritt lenkt. Dieser Umlenkeffekt funktioniert bereits mit einer Extrusionssäulenreihe. Die Anzahl der Extrusionssäulenreihen, die mit dem Gasstrom versorgt werden können, ohne dass eine zusätzliche Gasaustrittsplatte 11 benötigt wird, liegt je nach Extrusionssäulendesign und Gaskanalbreite beispielsweise zwischen einer und dreissig Reihen, bevorzugt zwischen zwei und zwanzig Reihen, noch mehr bevorzugt zwischen drei und acht Reihen. Neben den erwähnten Beispielen sind weitere Geometrien, Kombinationen der Geometrien und unterschiedliche Geometrien bei der Vorrichtung 1 möglich.

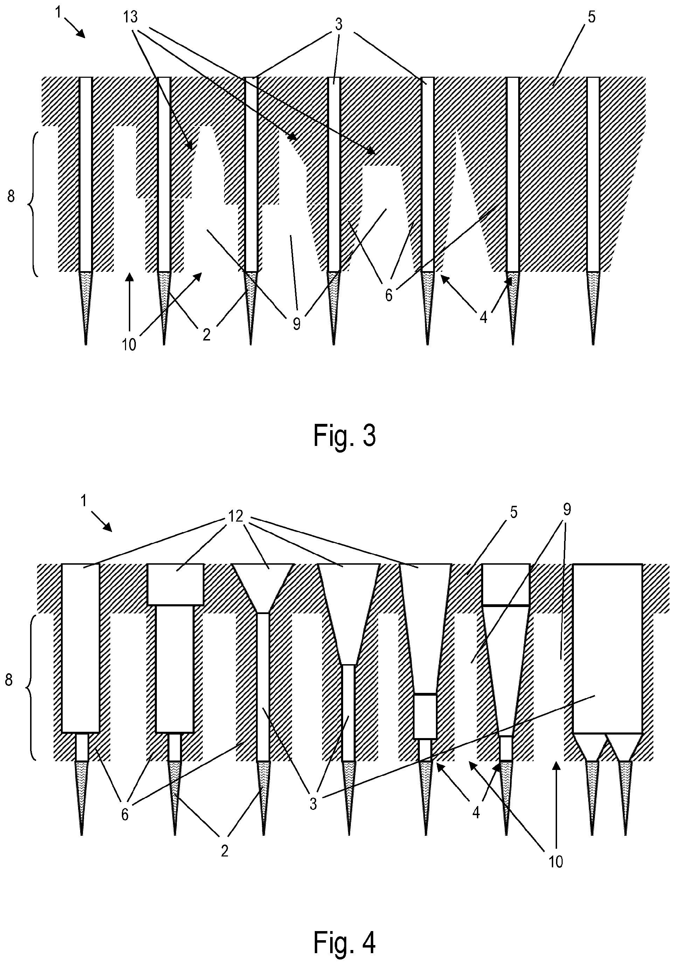

Figur 3 zeigt, dass die Außengeometrie der Extrusionssäulen 6 verschiedenste Formen annehmen kann. Je nach Form der Extrusionssäulen 6 ergibt sich eine andere Form des Gasstromkanals 9 und der Gasstrom wird anders umgelenkt. Es können auch Leitkeile in den Gasstromkanal 9 geformt werden, um die Strömung zu beeinflussen.

Um die Gasstromumlenkung zu fördern, können die Außengeometrie und die Anordnung der Extrusionssäulen 6, wie in Figur 3 dargestellt, variiert werden. Dabei können die Außengeometrien beispielsweise durchgehend, abgestuft, mehrmals abgestuft, zylindrisch, kegelig, als Quader, als Obelisk, als Pyramide, oder als Kombination verschiedener Geometrien ausgeführt sein. Die Außengeometrie der Extrusionssäulen 6 ist bevorzugt aus der Gruppe bestehend aus zylindrisch, kegelig, quaderförmig, obeliskförmig, pyramidenförmig oder Mischungen davon ausgewählt. Unter "Mischung" wird verstanden, dass die Außengeometrie sich über die Länge der Extrusionssäule verändert. Die Extrusionssäule 6 kann beispielsweise über einen Großteil ihrer Länge zylindrisch, aber an ihrer Spitze als Kegel ausgeführt sein.

Die Extrusionssäulen 6 können entweder gleich oder unterschiedlich lang sein, um Variationen in der Faserfeinheit zu erzeugen.

Die Länge einer Extrusionssäule 6 vom Fuß bis zur Spitze kann zwischen 10mm und 200mm, bevorzugt 20mm und 100mm, noch mehr bevorzugt zwischen 30mm und 60mm liegen. Für zylindrische Extrusionssäulen 6 kann der Außendurchmesser, je nach Innengeometrie der Extrusionskapillare 3 und Länge der Extrusionssäule 6, zwischen 3mm und 30mm, bevorzugt zwischen 6mm und 20mm, noch mehr bevorzugt zwischen 9mm und 15mm sein. Bei kegelförmigen Extrusionssäulen 6 kann der Durchmesser der Grundfläche zwischen 3mm und 30mm, bevorzugt zwischen 6mm und 20mm, noch mehr bevorzugt zwischen 9mm und 15mm sein. Die Spitze des Kegels kann sich bis zu einem Durchmesser von 0,1mm verjüngen. Bei quaderförmigen Extrusionssäulen 6, Obelisken und Pyramiden liegt die Seitenlänge zwischen 3mm und 30mm, bevorzugt zwischen 6mm und 20mm, noch mehr bevorzugt zwischen 9mm und 15mm. Neben den erwähnten Beispielen sind weitere Geometrien, Kombinationen der Geometrien und unterschiedliche Geometrien bei der Vorrichtung 1 möglich.

Die Extrusionssäulen 6 können zusätzlich beheizt oder gekühlt werden, um die Spinnstabilität zu verbessern.

Figur 3 zeigt, dass der Gasstromkanal 9 zwischen den Extrusionssäulen 6 durch Strömungskeile 13, Abstufungen und sonstige Geometrien geändert werden kann, um die Umlenkung des Gasstromes zu optimieren. Je nach Gesamtlänge der Vorrichtung 1, Reihenanzahl, Breite und Geometrien der Extrusionssäulen 6 ergibt sich die Breite des Gasstromkanals 9. Die Breite des Gasstromkanals 9 liegt im Bereich von 1mm bis 50mm, bevorzugt 2mm bis 40mm, noch mehr bevorzugt 3mm bis 30mm. Innerhalb einer Spalte kann der Gasstromkanal 9 zwischen den Extrusionssäulen 6 ausgelassen werden. Damit entsteht eine breite Extrusionssäule 6 mit mehreren Extrusionskapillaren 3. Es hat sich herausgestellt, dass die Oberflächen der Extrusionssäulen 6 und des Gasstromkanals 8 poliert werden sollten, um Turbulenzen zu minimieren. Neben den erwähnten Beispielen sind weitere Geometrien, Kombinationen der Geometrien und unterschiedliche Geometrien bei der Vorrichtung 1 möglich.

Gemäß einer bevorzugten Ausführungsvariante der erfindungsgemäßen Vorrichtung 1 ist je Extrusionssäule 6 eine Extrusionskapillare 3 vorgesehen. In einer alternativen Ausführungsvariante weist die Vorrichtung 1 zumindest eine Extrusionssäule 6 auf, in welcher zwei oder mehr Extrusionskapillaren 3 angeordnet sind. Die in Figur 3 dargestellte Vorrichtung 1 weist beispielsweise zwei komplett getrennte Extrusionskapillaren 3 mit zugehörigen Extrusionsöffnungen 4 auf, welche in einer gemeinsamen Extrusionssäule 6 angeordnet sind.

Grundsätzlich sind auch Ausführungsvarianten mit einer hohen Zahl an Extrusionskapillaren 3 pro Extrusionssäule 6 möglich. Hierdurch wird der Vorteil erreicht, dass die Vorrichtung zur Herstellung einer Vielzahl an unterschiedlichen Spinnvliesen aus verschiedensten Materialien geeignet ist.

Figur 4 zeigt, dass die Innengeometrie der Extrusionskapillaren 3 verschiedenste Formen annehmen kann. Je nach Form wird die Strömung der Schmelze bzw. der Lösung anders beeinflusst und der Druckverlust und das Spinnverhalten werden verändert.

Da die Extrusionssäulen 6 mehr Platz einnehmen als beispielsweise die Nadeln einer mehrreihigen Nadeldüse aus dem Stand der Technik, muss der Durchsatz pro Loch viel höher sein, um die notwendigen Durchsätze zu erreichen. Dafür muss die Geometrie der Extrusionskapillare 3 an die rheologischen Eigenschaften der verwendeten Materialien angepasst werden. Figur 4 zeigt, dass bei der Vorrichtung 1 die Geometrie der Extrusionskapillaren 3 je nach Bedarf variiert werden kann, um den Druckverlust für verschiedene Schmelzen und Lösungen für hohe Durchsätze, soweit wie möglich zu reduzieren. Dabei können die Extrusionskapillaren 3 beispielsweise durchgehend, abgestuft, mehrmals abgestuft, zylindrisch, kegelig, als Quader, als Obelisk, als Pyramide, oder als Kombination verschiedener Geometrien ausgeführt sein. Eine Extrusionskapillare 3 kann beispielsweise über den Großteil ihrer Länge zylindrisch, aber die Spitze als Kegel ausgeführt sein. Die Spitze des Kegels kann sich bis zu einem Durchmesser von 0,09mm verjüngen. Die Extrusionskapillaren 3 können entweder gleich oder unterschiedlich lang sein, um Variationen in der Faserfeinheit zu erzeugen. Wie bereits erwähnt, können die Extrusionskapillaren 3 zusätzlich beheizt oder gekühlt werden, um die Spinnstabilität zu verbessern. Wie in Figur 4 dargestellt, weisen gemäß einer bevorzugten Ausführungsvariante der Vorrichtung 1 die Extrusionskapillaren 3 einen Einlassabschnitt 12 auf, dessen Geometrie sich von jener der restlichen Abschnitte der Extrusionskapillare 3 unterscheidet.

Gemäß einer weiteren Ausführungsvariante der Vorrichtung 1 weist zumindest eine Extrusionskapillare 3 beispielsweise zwei oder mehr Extrusionsöffnungen 4 auf, wie in Figur 4 beispielhaft dargestellt.

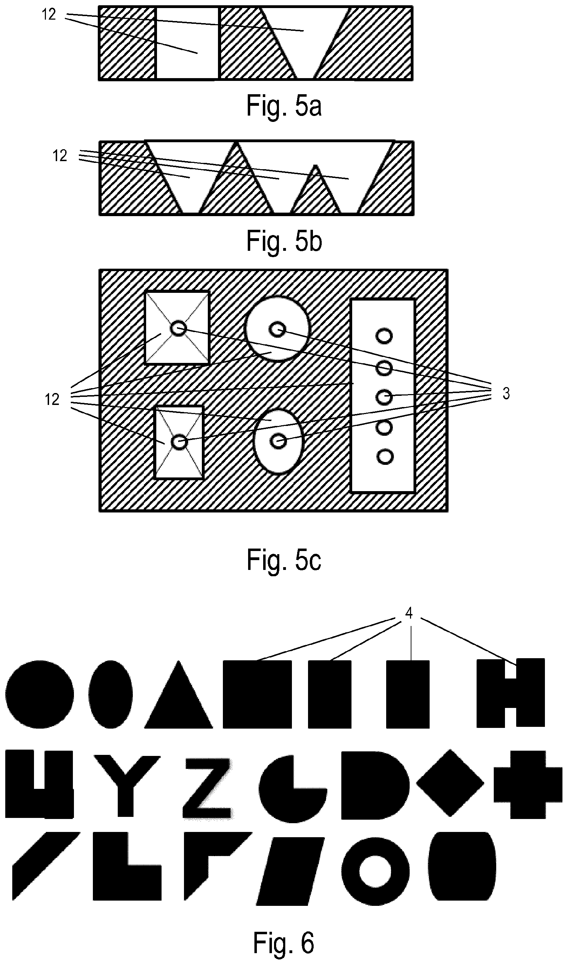

Die Figuren 5a, 5b und 5c zeigen, dass die Einlaufgeometrie des Einlassabschnittes 12, der Querschnitt und die Anordnung bzw. Überschneidung der Extrusionskapillaren 3 sehr unterschiedlich sein kann. In Figur 5a bis 5c sind verschiedene Variationen der Geometrie des Einlassabschnittes 12 der Extrusionskapillaren 3 dargestellt, wobei Figur 5a und Figur 5b unterschiedliche Geometrien des Einlassabschnitts 12 in Seitansicht darstellen, und Figur 5c eine Draufsicht unterschiedlicher Einlassabschnitte 12 zeigt. Die Geometrie des Einlassabschnittes 12 der Extrusionskapillaren 3 kann je nach Bedarf variiert werden, um den Druckverlust für verschiedene Schmelzen und Lösungen für hohe Durchsätze soweit wie möglich zu reduzieren Figur 5a und Figur 5b zeigen in der Seitenansicht, dass die Geometrie des Einlassabschnittes 12 zylindrisch oder konisch ausgeführt werden kann. Es hat sich gezeigt, dass zwischen den einzelnen Einlaufformen ein Abstand oder eine Überschneidung der Geometrien des Einlassabschnittes 12 sein kann. In der Draufsicht von Figur 5c wird dargestellt, dass die Geometrie des Einlassabschnittes 12 der Extrusionskapillare 3 auch quadratisch, rechteckig, kreisrund und elliptisch sein kann. Neben den erwähnten Beispielen sind weitere Geometrien, Mischungen der Geometrien und unterschiedliche Geometrien bei der Vorrichtung 1 möglich. Unter "Mischung" ist erneut zu verstehen, dass sich die Geometrie des Einlassabschnittes 12 über dessen Länge verändert. Figur 5c zeigt des Weiteren, dass mehrere Extrusionsöffnungen 4 von einem gemeinsamen Einlassabschnitt 12 versorgt werden können. Dieser Einlassabschnitt 12 kann auch eine Extrusionskapillare 3 versorgen, mit welcher diese Extrusionsöffnungen 4 verbunden sind.

Figur 6 zeigt unterschiedliche Formen der Extrusionsöffnung 4 am Auslauf der Extrusionskapillare 3. Die Extrusionsöffnung 4 am Auslauf der Extrusionskapillare 3 kann sehr unterschiedlich geformt sein. Dadurch ergeben sich unterschiedliche Filamentgeometrien und Produkteigenschaften. Die Extrusionsöffnung 4 der Extrusionskapillare 3 gibt die Querschnittsform des extrudierten Filaments 2 vor und kann verschiedenste Geometrien aufweisen. Wie in Figur 6 gezeigt, kann die Extrusionsöffnung 4 unter anderem kreisförmig, elliptisch, dreieckig, quadratisch, rechteckig, als Spalt, als Halbkreis, als Halbmond, als Stern, als Trapez, als L-Form, als T-Form, als U-Form, als Y-Form oder als Z-Form ausgeführt werden. Des Weiteren kann die Extrusionsöffnung 4 auch H-förmig ausgeführt werden. Der Durchmesser bei einer kreisförmigen Extrusionsöffnung 4 kann zwischen 90µm und 700µm, bevorzugt zwischen 150µm und 500µm, noch mehr bevorzugt zwischen 200µm und 400µm sein. Neben den erwähnten Beispielen, sind weitere Geometrien, Kombinationen der Geometrien und unterschiedliche Geometrien bei der Vorrichtung 1 möglich.

Figur 7a zeigt eine Gasstromaustrittsplatte 11 in einer schematischen Seitansicht, und Figur 7b zeigt eine weitere Gasstromaustrittsplatte 11 in einer Draufsicht. Die Gasstromaustrittsplatte 11 kann verwendet werden, um die Luftströmung beim Austritt zu beeinflussen. Bei der Geometrie der Gasaustrittsöffnungen 10 sind verschiedenste Varianten möglich. Hierdurch wird die Möglichkeit bereitgestellt, weitere Variationen bei der Filamentformung und Vliesherstellung zu generieren. Die Geometrie der Gasaustrittsöffnug 10 kann beispielsweise kreisrund, rechteckig, quadratisch, oder dreieckig sein. Bei kreisrunden Gasaustrittsöffnungen 10 liegt der Durchmesser im Bereich 1mm bis 15mm, bevorzugt zwischen 1,5mm bis 10mm, noch mehr bevorzugt zwischen 2mm bis 8mm. Die Löcher können beispielsweise konisch oder zylindrisch sein. Der Gasaustritt kann vor oder nach der Extrusionsöffnung 4 erfolgen. Die Gasaustrittsöffnung 10 kann eine oder mehrere Extrusionsöffnungen 4 umgeben. Zusätzlich können in der Gasstromaustrittsplatte 11 weitere Gasaustrittsöffnungen 10 vorhanden sein, ohne eine Extrusionsöffnung 4 zu umgeben. Die Gasstromaustrittsplatte 11 kann auch aus mehreren Platten, Stiften, Balken und Drähten geformt sein. Neben den erwähnten Beispielen, sind weitere Geometrien, Kombinationen der Geometrien und unterschiedliche Geometrien bei der Vorrichtung 1 möglich.

Zumindest ein Teil der Extrusionssäulen 6 der erfindungsgemäßen Vorrichtung 1 kann sich gemäß einer Ausführungsvariante der Vorrichtung 1 von einem anderen Teil der Extrusionssäulen 6 in zumindest einer Eigenschaft gewählt aus der Länge der Extrusionssäule 6, der Außengeometrie der Extrusionssäule 6, dem Außendurchmesser der Extrusionssäule 6, dem Vorliegen eines Einlassabschnitts 12 der Extrusionskapillare 3, der Geometrie des Einlassabschnitts 12 und der Geometrie der Extrusionsöffnungen 4 unterschieden.

In einer weiteren Ausführungsvariante weist die Vorrichtung 1 eine im Wesentlichen rechteckige Grundform auf. Hierdurch werden fertigungstechnische Vorteile erreicht.

Figur 7b zeigt des Weiteren, dass mehrere Extrusionsöffnungen 4 durch die gleiche Gasstromaustrittsöffnung 10 versorgt werden können. Bei den innerhalb einer Gasstromaustrittsöffnung 10 liegenden Extrusionsöffnungen 4 handelt es sich um Extrusionsöffnungen 4 zu einer gemeinsamen Extrusionssäule 6, welche in Figur 7b nicht dargestellt ist.

Die beschriebene Erfindung stellte eine Verbesserung im Vergleich zu bekannten Düsen in Bezug auf Fertigungsaufwand, Designvielfalt, Durchsatz, Zusammenbau, Skalierbarkeit auf große Längen und Betrieb dar. Dabei können als Rohstoff die bereits für andere Meltblown-Verfahren verwendeten Polyolefine als homopolymere und Co-Polymere (bspw. EVA), sowie Terpolymere, Polyester, Polyamide, Polyvinyle, Nylon, PC, und andere passende Rohstoffe verwendet werden. Polyolefine wie PP, PE, LDPE, HDPE, LLDPE, werden als homopolymer oder Co-Polymer bevorzugt verwendet. Auch Celluloseacetat, Stärke-Lösungen und Lyocell-Lösungen können mit der vorliegenden Erfindung und den genannten Vorteilen zu Herstellung von Filamenten und Spinnvliesstoffen verwendet werden.

Die Vorrichtung 1 kann somit zur Extrusion von Filamenten 2 und zur Herstellung von Spinnvliesen aus verschiedensten polymeren Materialien verwendet werden. Diese umfassen insbesondere Schmelzen von Thermoplasten wie Polypropylen, Polystyren, Polyester, Polyurethan, Polyamid, EVA, EMA, EVOH, schmelzbare Copolymere, PBT, PPS, PMP, PVA, PLA oder Lyocell-Spinnmasse, wobei die Verwendung von Lyocell-Spinnmasse besonders bevorzugt ist.

Der Gattungsname "Lyocell" wurde von der BISFA (The International Bureau for the Standardisation of Man Made Fibres) vergeben und steht für Cellulosefasern, die aus Lösungen der Cellulose in einem organischen Lösungsmittel hergestellt werden. Bevorzugt werden als Lösungsmittel tertiäre Aminoxide, insbesondere N-methyl-morpholin-N-oxid (NMMO) eingesetzt. Ein Verfahren zur Herstellung von Lyocellfasern ist z.B. in der US 4,246,221 A beschrieben. Weitere mögliche Lösungsmittel werden oft unter dem Sammelbegriff "Ionische Flüssigkeiten" zusammengefasst.

Wie bereits erwähnt, wird bei der Herstellung von Vliesstoffen mit der Vorrichtung 1 die Schmelze bzw. die Lösung durch die Vorrichtung 1 gepumpt, mit Heißluft verstreckt und als Vliesstoff auf einer Trommel oder einem Förderband abgelegt. Das hergestellte Vlies kann je nach Rohstoff entweder direkt aufgewickelt werden, oder muss vorher gewaschen, nachbehandelt und getrocknet werden. Je nach verwendetem Rohstoff kann das Design der vorliegenden Erfindung so angepasst werden, dass Temperaturen zwischen 20°C und 500°C, bevorzugt 50°C bis 400°C, noch mehr bevorzugt zwischen 100°C und 300°C betrieben werden können, solange der Rohstoff und das hergestellte Vlies nicht durch die Temperatur beschädigt werden. Erfindungsgemäß kann die Vorrichtung 1 so massiv ausgeführt werden, dass auf Seiten der Schmelze Drücke zwischen 10bar und 300bar, bevorzugt zwischen 20bar und 200bar, noch mehr bevorzugt zwischen 30bar und 150bar wirken können. Die Durchsätze von Schmelze bzw. Lösung und des zur Vliesherstellung benötigten Gasstromes können je nach verwendetem Rohstoff, dem Abstand zwischen Vorrichtung 1 und Ablage, dem Düsendesign und der verwendeten Temperatur, stark variieren. Der übliche Durchsatz von Schmelze bzw. Lösung pro Extrusionsloch liegt im Bereich von 1g/Loch/min bis 30g/Loch/min, bevorzugt 2g/Loch/min bis 20g/Loch/min, noch mehr bevorzugt zwischen 3g/Loch/min und 10g/Loch/min. Das entspricht bei einer Vorrichtung 1 mit 1m Länge, 6 Reihen und 100 Spalten, einem Durchsatz von 1080kg/h/m. Dadurch ist der Durchsatz der Vorrichtung 1 höher als bei der Nadeldüse und viel höher als bei den einreihigen Düsen. Der übliche Bereich für die Menge des Gasstroms in kg Gas pro kg Schmelze bzw. Lösung, liegt zwischen 10-300kg/kg, bevorzugt 20kg/kg bis 200kg/kg, noch mehr bevorzugt zwischen 30kg/kg und 100kg/kg. Da die Vorrichtung 1 bis zu 5m Länge und darüber hinaus gefertigt werden kann, können Vliesbreiten von 5m und darüber hinaus erreicht werden. Die hergestellten Produkte haben je nach Vorrichtungsdesign, Rohstoff und Betriebsparameter Faserdurchmesser von 1µm bis 30µm, bevorzugt 2µm bis 20µm, noch mehr bevorzugt zwischen 3µm und 10µm. Je nach Durchsatz und Transportgeschwindigkeit können mit der erfindungsgemäßen Vorrichtung Vliesstoffe mit Flächengewichten zwischen 5g/m² und 1000g/m², bevorzugt 10g/m² und 500g/m², noch mehr bevorzugt zwischen 15g/m² und 200g/m², hergestellt werden.

Die erfindungsgemäße Vorrichtung 1 für die Extrusion von Filamenten 2 wird in einem Verfahren hergestellt, welches den Schritt der Herstellung der Grundplatte 5, der Extrusionssäulen 6 gegebenenfalls der Gaszufuhröffnungen 7 und weiter gegebenenfalls der Gasaustrittsplatte 11 in einem Stück durch gemeinsame Ausformung aus einem Grundmaterial umfasst.

## Patentansprüche

1. Vorrichtung (1) für die Extrusion von Filamenten (2) mit einer Mehrzahl von in zumindest zwei hintereinander liegenden Reihen angeordneten Extrusionskapillaren (3) mit Extrusionsöffnungen (4) zur Extrusion einer Spinnlösung unter Bildung der Filamente (2) und einer Mehrzahl von Mitteln (7, 8, 10) zur Gasstromerzeugung zur Erzeugung eines zumindest im Bereich der Extrusionsöffnungen (4) im Wesentlichen in Richtung der Extrusion der Filamente (2) orientierten Gasstroms, **dadurch gekennzeichnet, dass** die Extrusionskapillaren (3) in aus einer Grundplatte (5) herausragenden und mit dieser Grundplatte (5) einstückig ausgebildeten Extrusionssäulen (6) angeordnet sind.

2. Vorrichtung (1) gemäß Anspruch 1, **dadurch gekennzeichnet, dass** die Mittel (7, 8, 10) zur Gasstromerzeugung zumindest zwei Gaszufuhröffnungen (7) beinhalten, die benachbart zur Grundplatte (5) angeordnet sind, einander gegenüberliegen und zur Erzeugung eines im Bereich der Gaszufuhröffnungen (7) im Wesentlichen senkrecht zur Richtung der Extrusion der Filamente (2) orientierten Gasstroms ausgestaltet sind.

3. Vorrichtung (1) gemäß Anspruch 1 oder 2, **dadurch gekennzeichnet, dass** die Außengeometrie der Extrusionssäulen (6) aus der Gruppe bestehend aus zylindrisch, kegelig, quaderförmig, obeliskförmig, pyramidenförmig oder Mischungen davon gewählt ist.

4. Vorrichtung (1) gemäß einem der vorherigen Ansprüche, **dadurch gekennzeichnet, dass** die Extrusionskapillaren (3) einen Einlassabschnitt (12) aufweisen, dessen Geometrie sich von jener der restlichen Abschnitte der Extrusionskapillare (3) unterscheidet.

5. Vorrichtung (1) gemäß Anspruch 4, **dadurch gekennzeichnet, dass** die Geometrie des Einlassabschnittes (12) aus der Gruppe bestehend aus zylindrisch, konisch, quadratisch, rechteckig, kreisrund, elliptisch und Mischungen davon gewählt ist.

6. Vorrichtung (1) gemäß einem der vorherigen Ansprüche, **dadurch gekennzeichnet, dass** die Geometrie der Extrusionsöffnungen (4) aus der Gruppe bestehend aus kreisförmig, elliptisch, dreieckig, quadratisch, rechteckig, T-förmig, H-förmig, U-förmig, Y-förmig und Z-förmig gewählt ist.

7. Vorrichtung (1) gemäß einem der vorherigen Ansprüche, **dadurch gekennzeichnet, dass** zumindest ein Teil der Extrusionssäulen (6) sich von einem anderen Teil der Extrusionssäulen (6) in zumindest einer Eigenschaft gewählt aus
- Länge der Extrusionssäule (6)
- Außengeometrie der Extrusionssäule (6)
- Außendurchmesser der Extrusionssäule (6)
- Vorliegen eines Einlassabschnitts (12) der Extrusionskapillare (3)
- Geometrie des Einlassabschnitts (12)
- Geometrie der Extrusionsöffnungen (4)
unterscheidet.

8. Vorrichtung (1) gemäß einem der vorherigen Ansprüche, **dadurch gekennzeichnet, dass** die Mittel (7, 8, 10) zur Gasstromerzeugung gegebenenfalls zusätzlich Gasaustrittsöffnungen (10) beinhalten, die im Bereich der Extrusionsöffnungen (4) angeordnet sind und zur Erzeugung eines in Richtung der Extrusion orientierten Gasstromes ausgestaltet sind oder, im Fall dass Gaszufuhröffnungen (7) benachbart zur Grundplatte (5) vorgesehen sind, zum Auslass des Gasstromes in Richtung der Extrusion ausgestaltet sind.

9. Vorrichtung (1) gemäß Anspruch 8, **dadurch gekennzeichnet, dass** die Vorrichtung (1) eine Gasaustrittsplatte (11) umfasst, wobei die Gasaustrittsöffnungen (10) in der Gasaustrittsplatte (11) ausgebildet sind.

10. Vorrichtung (1) gemäß Anspruch 9, **dadurch gekennzeichnet, dass** die Gasaustrittsplatte (11) einstückig mit der Grundplatte (5) und den Extrusionssäulen (6) ausgebildet ist.

11. Vorrichtung (1) gemäß einem der vorhereigen Ansprüche, **dadurch gekennzeichnet, dass** die Vorrichtung (1) eine im wesentlichen rechteckige Grundform aufweist.

12. Vorrichtung (1) gemäß einem der vorherigen Ansprüche, **dadurch gekennzeichnet, dass** je Extrusionssäule (6) eine Extrusionskapillare (3) vorgesehen ist.

13. Vorrichtung gemäß einem der Ansprüche 1 bis 11, **dadurch gekennzeichnet, dass** die Vorrichtung (1) zumindest eine Extrusionssäule (6) aufweist, in welcher zwei oder mehr Extrusionskapillaren (3) vorgesehen sind.

14. Verwendung einer Vorrichtung (1) gemäß einem der vorherigen Ansprüche zur Extrusion von Filamenten (2) und zur Herstellung von Spinnvliesen aus verschiedensten polymeren Materialien, insbesondere aus Schmelzen von Thermoplasten wie Polypropylen, Polystyren, Polyester, Polyurethan, Polyamid, EVA, EMA, EVOH, schmelzbare Copolymere, PBT, PPS, PMP, PVA, PLA oder Lyocell-Spinnmasse, besonders bevorzugt aus einer Lyocell-Spinnmasse.

15. Verfahren zur Herstellung einer Vorrichtung (1) gemäß einem der Ansprüche 1 bis 13, umfassend den Schritt der Herstellung der Grundplatte (5), der Extrusionssäulen (6) und gegebenenfalls der Gaszufuhröffnungen (7) sowie gegebenenfalls der Gasaustrittsplatte (11) in einem Stück durch gemeinsame Ausformung aus einem Grundmaterial.

## Claims

1. A device (1) for the extrusion of filaments (2) comprising a plurality of extrusion capillaries (3) arranged in at least two consecutive rows and having extrusion openings (4) for extruding a spinning solution, whereby the filaments (2) are formed, and a plurality of means (7, 8, 10) for the generation of a gas stream for producing a gas stream oriented essentially in the direction of the extrusion of the filaments (2) at least in the area of the extrusion openings (4), **characterized in that** the extrusion capillaries (3) are arranged in extrusion columns (6) which protrude from a base plate (5) and are formed in one piece with said base plate (5).

2. A device (1) according to claim 1, **characterized in that** the means (7, 8, 10) for the generation of a gas stream include at least two gas supply openings (7), which are arranged adjacent to the base plate (5), are located opposite to each other and are configured so as to produce a gas stream oriented essentially vertically to the direction of the extrusion of the filaments (2) in the area of the gas supply openings (7).

3. A device (1) according to claim 1 or 2, **characterized in that** the external geometry of the extrusion columns (6) is selected from the group consisting of cylindrical, conical, cuboidal, obelisk-shaped, pyramid-shaped or mixtures thereof.

4. A device (1) according to any of the preceding claims, **characterized in that** the extrusion capillaries (3) exhibit an inlet section (12) the geometry of which differs from that of the remaining sections of the extrusion capillary (3).

5. A device (1) according to claim 4, **characterized in that** the geometry of the inlet section (12) is selected from the group consisting of cylindrical, conical, square, rectangular, circular, elliptical and mixtures thereof.

6. A device (1) according to any of the preceding claims, **characterized in that** the geometry of the extrusion openings (4) is selected from the group consisting of circular, elliptical, triangular, square, rectangular, T-shaped, H-shaped, U-shaped, Y-shaped and Z-shaped.

7. A device (1) according to any of the preceding claims, **characterized in that** at least part of the extrusion columns (6) differs from another part of the extrusion columns (6) in at least one property selected from
- the length of the extrusion column (6)
- the external geometry of the extrusion column (6)
- the external diameter of the extrusion column (6)
- the existence of an inlet section (12) of the extrusion capillary (3)
- the geometry of the inlet section (12)
- the geometry of the extrusion openings (4).

8. A device (1) according to any of the preceding claims, **characterized in that** the means (7, 8, 10) for the generation of a gas stream optionally include, in addition, gas outlet openings (10) arranged in the area of the extrusion openings (4) and designed for the production of a gas stream oriented in the direction of the extrusion or, in case that gas supply openings (7) are provided adjacent to the base plate (5), configured for discharging the gas stream in the direction of the extrusion.

9. A device (1) according to claim 8, **characterized in that** the device (1) comprises a gas outlet plate (11), with the gas outlet openings (10) being formed in the gas outlet plate (11).

10. A device (1) according to claim 9, **characterized in that** the gas outlet plate (11) is formed in one piece with the base plate (5) and the extrusion columns (6).

11. A device (1) according to any of the preceding claims, **characterized in that** the device (1) has an essentially rectangular basic shape.

12. A device (1) according to any of the preceding claims, **characterized in that** one extrusion capillary (3) is provided per extrusion column (6).

13. A device according to any of claims 1 to 11, **characterized in that** the device (1) comprises at least one extrusion column (6) in which two or more extrusion capillaries (3) are provided.

14. The use of a device (1) according to any of the preceding claims for the extrusion of filaments (2) and for the production of spunbonded fabrics from various polymeric materials, in particular from melts of thermoplastics such as polypropylene, polystyrene, polyester, polyurethane, polyamide, EVA, EMA, EVOH, fusible copolymers, PBT, PPS, PMP, PVA, PLA or Lyocell spinning dope, particularly preferably from a Lyocell spinning dope.

15. A method of producing a device (1) according to any of claims 1 to 13, comprising the step of manufacturing the base plate (5), the extrusion columns (6) and optionally the gas supply openings (7) as well as optionally the gas outlet plate (11) by forming them jointly in one piece from a base material.

## Revendications

1. Dispositif (1) permettant l'extrusion de filaments (2) avec une pluralité de capillaires d'extrusion (3) disposés sur deux rangées placées l'une derrière l'autre et dotés d'orifices d'extrusion (4) pour extruder une solution de filage formant des filaments (2), et une pluralité de moyens (7, 8, 10) de génération de flux de gaz pour générer, au moins dans la région des orifices d'extrusion (4), un flux de gaz orienté sensiblement dans la direction de l'extrusion des filaments (2), **caractérisé en ce que** les capillaires d'extrusion (3) sont disposés dans des colonnes d'extrusion (6) saillant d'une plaque de base (5) et formant une seule pièce avec cette plaque de base (5).

2. Dispositif (1) selon la revendication 1, **caractérisé en ce que** les moyens (7, 8, 10) de génération de flux de gaz comportent au moins deux ouvertures d'admission de gaz (7) qui sont disposées à proximité de la plaque de base (5), se font face entre elles et sont configurées pour générer un flux de gaz orienté sensiblement perpendiculairement à la direction d'extrusion des filaments (2) dans la région des ouvertures d'admission de gaz (7).

3. Dispositif (1) selon la revendication 1 ou 2, **caractérisé en ce que** la géométrie extérieure des colonnes d'extrusion (6) est choisie parmi le groupe composé des formes suivantes : cylindriques, coniques, quadrangulaires, en forme d'obélisques, pyramidales ou des mélanges de celles-ci.

4. Dispositif (1) selon une des revendications précédentes, **caractérisé en ce que** les capillaires d'extrusion (3) présentent une section d'entrée (12) dont la géométrie est différente de celles des autres sections des capillaires d'extrusion (3).

5. Dispositif (1) selon la revendication (4), **caractérisé en ce que** la géométrie de la section d'entrée (12) est choisie parmi le groupe composé des formes suivantes : cylindrique, conique, rectangulaire, circulaire, elliptique et des mélanges de celles-ci.

6. Dispositif (1) selon une des revendications précédentes, **caractérisé en ce que** la géométrie des ouvertures d'extrusion (4) est choisie parmi le groupe composé des formes suivantes : circulaires, elliptiques, triangulaires, quadrangulaires, rectangulaires, en forme de T, en forme de H, en forme de U, en forme de Y et en forme de Z.

7. Dispositif (1) selon une des revendications précédentes, **caractérisé en ce qu'**au moins une partie des colonnes d'extrusion (6) se différencie d'une autre partie des colonnes d'extrusion (6) par au moins une caractéristique choisie parmi les suivantes :
- longueur de la colonne d'extrusion (6),
- géométrie extérieure de la colonne d'extrusion (6),
- diamètre extérieur de la colonne d'extrusion (6),
- présence d'une section d'entrée (12) des capillaires d'extrusion (3),
- géométrie de la section d'entrée (12) et
- géométrie des ouvertures d'extrusion (4).

8. Dispositif (1) selon une des revendications précédentes, **caractérisé en ce que** les moyens (7, 8, 10) de génération de flux de gaz comportent en outre le cas échéant des ouvertures d'évacuation de gaz (10) qui sont disposées dans la région des orifices d'extrusion (4) et sont conçues pour générer un flux de gaz orienté dans la direction de l'extrusion ou, dans le cas où des ouvertures d'admission de gaz (7) sont prévues à proximité de la plaque de base (5), sont conçues pour évacuer le flux de gaz dans la direction de l'extrusion.

9. Dispositif (1) selon la revendication 8, **caractérisé en ce que** ce dispositif (1) comporte une plaque d'évacuation de gaz (11), les ouvertures d'évacuation de gaz (10) étant formées dans la plaque d'évacuation de gaz (11).

10. Dispositif (1) selon la revendication 9, **caractérisé en ce que** la plaque d'évacuation de gaz (11) forme une seule pièce avec la plaque de base (5) et les colonnes d'extrusion (6).

11. Dispositif (1) selon une des revendications précédentes, **caractérisé en ce que** ce dispositif (1) présente une forme de base sensiblement rectangulaire.

12. Dispositif (1) selon une des revendications précédentes, **caractérisé en ce qu'**un capillaire d'extrusion (3) est prévu pour chaque colonne d'extrusion (6).

13. Dispositif (1) selon une des revendications 1 à 11, **caractérisé en ce que** ce dispositif comporte au moins une colonne d'extrusion (6) dans laquelle deux capillaires d'extrusion (3) ou plus sont prévus.

14. Utilisation d'un dispositif (1) selon une des revendications précédentes pour l'extrusion de filaments (2) et pour la fabrication de non-tissés faits des matériaux polymères les plus divers, en particulier de masses fondues de thermoplastiques tels que le propylène, le polystyrène, le polyester, le polyuréthane, le polyamide, l'EVA, l'EMA, l'EVOH, les copolymères fusibles, le PBT, le PPS, le PMP, le PVA, le PLA ou une masse de filage en Lyocell, et de façon particulièrement préférée d'une masse de filage en Lyocell.

15. Procédé de fabrication d'un dispositif (1) selon une des revendications 1 à 13, comprenant l'étape de fabrication de la plaque de base (5), des colonnes d'extrusion (6) et, le cas échéant, des ouvertures d'admission de gaz (7), ainsi que, le cas échéant, de la plaque d'évacuation de gaz (11) d'une seule pièce en les façonnant ensemble dans un matériau de base.
